Europäisches Patentamt

European Patent Office

Office européen des brevets

(19)

(11) EP 0 825 391 A1

(12) **EUROPEAN PATENT APPLICATION**

(43) Date of publication:
25.02.1998 Bulletin 1998/09

(51) Int Cl.6: **F24F 11/00**, G05D 23/19

(21) Application number: 97600008.3

(22) Date of filing: 05.08.1997

(84) Designated Contracting States:
AT BE CH DE DK ES FI FR GB GR IE IT LI LU MC NL PT SE

(30) Priority: 05.08.1996 GR 96100279
20.01.1997 GR 97100015

(71) Applicant: **Prevezanos, Spiros Crisanthou**
**13231 Petroupoli (GR)**

(72) Inventor: **Prevezanos, Spiros Crisanthou**
**13231 Petroupoli (GR)**

(54) **Certification's and graduation's activity system of subordinated buildings behavior heat and cooling activity's sources too**

(57)     Certification's and graduation's activity system, of subordinated buildings behavior and heat and cooling energy sources.

The system certificates and graduates in reference the energy, the subordinated buildings, the heat and cooling energy's sources and the factors too which participate positively and negatively in energy's consumption.

The system makes worthy the possibilities, which the today, modem technology of the electronics, telematics and informative offers without the comfort's, cost's, hygiene's, aesthetic's levels are sacrificed, contributing energy's saving environment's protection, culture inheritance and man's health.

Printed by Jouve, 75001 PARIS (FR)

**Description**

Certification's and graduation's activity system of subordinated buildings behavior heat and cooling activity's sources too.

This invention is referring to a certification's and graduation's activity system of subordinated buildings behavior per °C, month, city, in connection to multiple factors ,which influence their behavior in certification's activity as in graduation, surveying and control of heat and cooling activity's sources ,in connection to the factors which influence their efficiency.

Certification's and graduation's activity system's of subordinated buildings behavior per °C, month, city in connection to multiple factors, which influence their behavior, so in certification's activity as in graduation surveying and control of heat and cooling energy, in connection to the factors, which influence their efficiency are not actually being. They are limited to daily, monthly, annual consumption's registers of heat and cooling(energy) activity's sources and they are leaded to general conclusions, by analysis of technical standards, or technical patterns.

Certification's and graduation's activity system of subordinated buildings behavior, heat and cooling activity's sources too, presents a particular practical interest, it's distinguished by its reliability in refers to : the certification and graduation activity of the behavior A: of subordinated to multiple factors B: heat and cooling activity of meteorological factors, in relation to the building, which is under certification and graduation. The system can accomplish directly all the above mentioned, continuously and simultaneously to innumerable buildings and sources of energy worldwide, as if it surveying and detect too the divergence per % of the energy source from the defined variable, self-acting, as a result to be done the necessary corrective actions in due course. Contemporaneously and at will the system can register internal rooms pollution, dirts arised from buildings external side either inside, with the possibility of direct notification in case that the concentration's values of one or more dirts exceed the tolerable limits. The system on account of multiple advantages and of particularly low cost, it can constitute a structural element of the buildings, of cooling plants, heat and cooling energy sources. As a result of the above mentioned constitutes the maximization of energy saving, man's health protection, of environment and the culture inheritance and the comfort's, cost's, hygiene's, and aesthetic of buildings level's they are not sacrificed, also.

The system makes useful the possibilities which offers the present, modem technology of electronics telematics and informatics. It is supported mainly on the interpretation of the behavior of heat and interruption's time of the energy sources, behavior that has the mean of law on each occasion loads. Corner stone, the activity index, which for the heat rooms f. e. is express as:

the ratio of energy's consumption by time unit for the surface unit of the heating room, when the heat which is leaded from the source to the room has taken its max value (with an external temperature 18 °C or whichever other which is selected by the user max external temperature heat's operation beginning) and is equal to heat flow from the room to the environment in its max time value per °C, month, city in connection to multiple variables, which are defined with multiple forms, in direct ratio to the range of the definition field.

$$E_{PE} = f(T)$$

$$E_{PE} = Q_{LEmax18°C}/t_{Em\ QLA(18-x)°C} * F * n$$

where:

| | |
|---|---|
| $E_{PE}$ | the activity for building's heating index in w/m$^2$ |
| T | the external temp in °C |
| x | integral number < = 18 |
| $Q_{LEmax18°C}$ | the heat leaded from energy source to the heating room per °C, so as to remain, in its max value, in a situation of heat balance. |
| $t_{Em\ QLA(18-x)°C}$ | the heat flow from the heating room to the environment (shell losses) per °C, when energy's source is found, in situation of heat balance, in max time value. |
| F | the surface of heating room in m$^2$ |
| n | height coefficient of the heating room (h/3.00) |
| h | the height of heating room in m. |

if:

$Q_{LEmax18°C} < Q_{LA\ (18-x)\ °C}$ there is not balance, the energy's source is found to a potential situation. To obtain the relation, $Q_{LEmax18°C} = Q_{LA\ (18-x)\ °C}$ either we increase the value of $Q_{LEmax18°C}$, either we decrease the value of $_{QLA\ (18-x)\ °C}$. Alternatively the activity index is expressed, in absolute value, as mass index or volume, as much as it's not take in consideration the variables $(n_o),(H_u)$ the index Wobbe.

In the system the above mentioned are treated in connection to other information which derive either from in part systems of detection and register, either from deposited information OFF-LINE in base data (of buildings, energy sources, climatic elements, ecc).

The system is constituted by HARDWARE-SOFTWARE which is established to the heat or cooling energy's source of the building or to the isolated heat or cooling energy's source and it is become a structural element of the building or source, from a system of data transfer, giving continuous information of multiple variables and from the system of treatment above mentioned data.

## Claims

1. Certification's and graduation's activity system of behavior the subordinated buildings and heat and cooling sources of energy, which is constituted by: a register system of the temperature's medium value of the surrounded space of each building and the internal room too this per hour, day, month, year by a register's system diary operation's time also interruption time of heat and cooling energy's sources, with second's precision, by transfer system either by wire, either wireless, either by means data mobile of communication, in line, parallel or by means networks either ON-LINE either automatically in programming hour, either at will, in personal, regional or central unit with reversible, communication, by recognition's system of each building, by electronic system of elaboration the above mentioned data, in combination with deposited information in base data OFF-LINE, which it deriues (of buildings, energy sources, climatic elements ecc), using similarity's and modeling's program elaborate the above mentioned data, graduating in energy the behavior of each building of simple or mixed use per °C, month, city, heat and cooling energy sources per °C, too.

2. Certification's and graduation's activity system of subordinated buildings behavior and heat and cooling energy sources, accordingly to claim 1, characterizing by the fact that it brings a more system:

   A. Self acting detection of declination per cent of efficiency heat or cooling energy's source, from the defined on each occasion variable either coexisting with the central unit either with autonomous operation either as structural element of the source.
   B. Operation's self acting interruption of the energy source, if the per cent (%) declination value overpass the defined value per cent either coexisting with the central unit either with autonomous operation, either as structural element of the source.

3. Certification's and graduation's activity system of subordinated buildings behavior and heat and cooling energy sources, accordingly to claim 1, characterizing by the fact it that brings a more system: of detection and registration continuously or at will, of the per cent (%) content $O_2$, CO, $SO_2$, HC and $NO_x$ of the exhaust gas, isolated or totally and the temperature, of exhaust gas energy's heat source either coexisting with the central unit, either with autonomous operation.

4. Certification's and graduation's activity system of subordinated buildings behavior and heat and cooling energy sources, accordingly the claim 1,2 and 3, characterizing by the fact it that brings a more system: of regulation of the fuel's output, heat energy's sources with gas combustible, bringing back (if it depends on the above mentioned variable, the efficiency of the same in the defined, on each occasion, variable with regulation's criterion the measured concentration of CO in the exhaust gas, to not overpass the value of 300 PPM, either coexisting with the central unit, either with autonomous operation.

5. Certification's and graduation's activity system of subordinated buildings behavior and heat and cooling energy sources, accordingly to claim 1, characterizing by the fast that it brings a more system: of losses detection per cent %,by irradiation and convection of heat or cooling energy's sources, from defined variable per a °C either coexisting with the central unit, either by autonomous operation, either as strctural element of the source.

6. Certification's and graduation's activity system of subordinated buildings behavior and heat and cooling energy sources, accordingly to claim 1, characterizing by the fast that it brings a more system: of selection at will user's accommodation level, which is defined by the medium value of the registered heat mass in connection to the registered temperature building's space, with the possibility connection's differentiation of the above mentioned variables, from the defined either coexisting with central unit either with autonomous operation.

7. Certification's and graduation's activity system of subordinated buildings behavior and heat and cooling energy sources, accordingly to claim 1, characterizing by the fact that it brings a more system:

   A. of well operate" control's and administration's energy systems (thermostats, compensation's thermostats ecc) superviewing their "differential" from the defined variable heat and cooling energy's sources.
   B. Participation's of them in energy having by the defined variable (activity's index), either coexisting with the central unit, either with autonomous operation.
   C. of " well operate" burner's electronic system by the defined variable.

8. Certification's and graduation's activity system of subordinated buildings behavior and heat and cooling energy sources, accordingly to claim 1, characterizing by the fact that it brings a more system:

   A. Building's shell heat and cooling power and of the transparent structural elements of the same, on account of losses per °C, from the defined variable (activity's index) coexisting with the central unit,
   B. of the losses from air speed and relative humidity of building's internal room per hour, day, year from the central unit,
   C. of losses from air change internal room per hour, day, month, year from reference's curve, coexisting with the central unit,
   D. of the losses from the building's emitted irradiation in the interval of an unclouded night, from reference's curve, coexisting with the central unit,
   E. of losses detection conductors network heat or cooling activity sources per °C,
   F. of activity's behavior building's mass from reference's curve, coexisting with the central unit,
   G. of profits or losses in the heating or air conditioned room, correspondingly, from the internal energy sources, per hour, day, month, year, coexisting with the central unit,
   H. of profits or losses in the heating or air conditioned room,correspondingly from the heat, which is leaded from solar radiation, coexisting with the central unit.
   I. user's accommodation level in connection to the external temperature coexisting with the central unit.

9. Certification's and graduation's activity system of subordinated buildings behavior and heat and cooling energy sources, accordingly to claim 1, characterizing by the fact that it brings a more system: of climatic data of each city per hour, day, month, year in connection to the geografic data and peculiarities of the same, which it derives with deposited information in data base OFF-LINE (intensity of direct and diffuse solar's irradiation, rainfall's height, wind's direction and intensity, ecc), graduating every factor in connection to the value, the duration, frequency and the repetition of this, in relation to the building which is under certification activity, either coexisting with the central unit either with the autonomous operation.

10. Certification's and graduation's activity system of subordinated buildings behavior and heat and cooling energy sources, accordingly to claim 1, characterizing by the fact that it brings more system: of registration in continuation or at will of the content per cent % of $CO_2$, CO, $SO_2$, NOX, radon and formaldeide with the possibility of adaption detection's systems and other coexisting with the central unit either with autonomous operation either coexisting with autonomous operation, either as building's fundamental data.

**European Patent Office**

**EUROPEAN SEARCH REPORT**

Application Number

EP 97 60 0008

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 142 305 A (MIRROR GROUP NEWSPAPERS LIMITE) <br> * the whole document * <br> --- | 1 | F24F11/00 <br> G05D23/19 |
| A | GB 2 212 949 A (STONECREST LIMITED) <br> * the whole document * <br> --- | 1 | |
| A | US 5 540 273 A (POLK STEVEN A  ET AL) <br> * column 6, line 39 - column 7, line 43 * <br> --- | 3 | |
| A | EP 0 186 381 A (HART DOUGLAS ROBINSON SANFORD) <br> * page 5, line 28 - page 9, line 12 * <br> ----- | 1 | |

| | TECHNICAL FIELDS SEARCHED      (Int.Cl.6) |
|---|---|
| | F24F |

The present search report has been drawn up for all claims

| Place of search | Date of completion of the search | Examiner |
|---|---|---|
| THE HAGUE | 8 December 1997 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)